# EUROPÄISCHE PATENTANMELDUNG

(11) **EP 3 501 749 A1**
(43) Veröffentlichungstag der Anmeldung: **26.06.2019**
(21) Anmeldenummer: 17209038.3
(22) Anmeldetag: 20.12.2017
(51) Int. Cl.: B25C 1/18, F16B 15/08

(54) **BEFESTIGUNGSELEMENTESTREIFEN**

(71) Anmelder: HILTI Aktiengesellschaft, 9494 Schaan (LI)
(72) Erfinder: Miescher, Stefan, 9494 Schaan (LI)
(74) Vertreter: Hilti Aktiengesellschaft Corporate Intellectual Property

(57) **Zusammenfassung**

Befestigungselementestreifen (10) mit Aufnahmeelementen (11) und in den Aufnahmeelementen aufgenommenen Befestigungselementen (12), welche jeweils eine Befestigungsrichtung definieren, welche für alle Befestigungselemente gleich ist, wobei die Aufnahmeelemente in mindestens einer Reihe angeordnet sind, welche eine Transportrichtung (40), ein vorderstes Aufnahmeelement und ein hinterstes Aufnahmeelement definiert, wobei die Befestigungsrichtung und die Transportrichtung einen spitzen Winkel miteinander einschliessen, wobei der Befestigungselementestreifen ein Stützelement für eine Abstützung des vordersten Aufnahmeelements gegen die Befestigungsrichtung und/oder ein Gegenstützelement (25) für eine Abstützung des hintersten Aufnahmeelements in die Befestigungsrichtung aufweist.

## Beschreibung

### Technisches Gebiet

Die Anmeldung betrifft einen Befestigungselementestreifen.

### Stand der Technik

Eintreibvorrichtungen weisen üblicherweise einen in einer Befestigungsrichtung verlaufenden Setzkanal für Befestigungselemente und ein Magazin für einen Transport der Befestigungselemente in einer Transportrichtung zu dem Setzkanal auf. Die Befestigungselemente werden üblicherweise in Form von Befestigungselementestreifen zur Verfügung gestellt, wobei ein solcher Befestigungselementestreifen Aufnahmen für die Befestigungselemente umfasst. Die Aufnahmen eines Streifens sind in einer Reihe angeordnet und mittels Verbindungsstegen miteinander verbunden. Die Befestigungselementestreifen werden nacheinander in einen Transportkanal des Magazins eingeführt.

Es sind Magazine und Befestigungselementestreifen bekannt, bei denen die Befestigungsrichtung und die Transportrichtung einen spitzen Winkel einschliessen. Dies bedeutet, dass die Befestigungselemente in der Befestigungsrichtung so zueinander versetzt sind, dass ein in der Transportrichtung vorderstes Befestigungselement auch in der Befestigungsrichtung das vorderste Befestigungselement ist. Wenn mehrere Befestigungselementestreifen hintereinander in dem Transportkanal angeordnet sind, führt dies dazu, dass ein in Transportrichtung nachfolgender Befestigungselementestreifen eine Kraft auf einen in Transportrichtung vorauslaufenden Befestigungselementestreifen ausübt, welche eine Kraftkomponente gegen die Befestigungsrichtung hat. Dies resultiert in einer erhöhten Reibung beim Transport der Befestigungselementestreifen.

### Darstellung der Erfindung

Es ist eine Aufgabe der Erfindung, einen Befestigungselementestreifen zur Verfügung zu stellen, welcher leichtgängig in einem Magazin transportierbar ist.

Die Aufgabe ist gelöst bei einem Befestigungselementestreifen mit Aufnahmeelementen und in den Aufnahmeelementen aufgenommenen Befestigungselementen, welche jeweils eine Befestigungsrichtung definieren, welche für alle Befestigungselemente gleich ist, wobei die Aufnahmeelemente in mindestens einer Reihe angeordnet sind, welche eine Transportrichtung, ein vorderstes Aufnahmeelement und ein hinterstes Aufnahmeelement definiert, wobei die Befestigungsrichtung und die Transportrichtung einen spitzen Winkel miteinander einschliessen, wobei der Befestigungselementestreifen ein Stützelement für eine Abstützung des vordersten Aufnahmeelements gegen die Befestigungsrichtung und/oder ein Gegenstützelement für eine Abstützung des hintersten Aufnahmeelements in die Befestigungsrichtung aufweist. Durch die Abstützung des vordersten beziehungsweise hintersten Aufnahmeelements wird eine Kraftkomponente, welche auf das Aufnahmeelement in die Befestigungsrichtung beziehungsweise gegen die Befestigungsrichtung ausgeübt wird, aufgenommen, so dass Reibungskräfte beim Transport des Befestigungselementestreifens in einem Transportkanal eines Magazins reduziert sind.

Eine vorteilhafte Ausführungsform ist dadurch gekennzeichnet, dass das vorderste Aufnahmeelement das Stützelement aufweist und/oder das hinterste Aufnahmeelement das Gegenstützelement aufweist.

Eine vorteilhafte Ausführungsform ist dadurch gekennzeichnet, dass das Stützelement für eine Abstützung des vordersten Aufnahmeelements an einem Gegenstützelement eines in Transportrichtung vor dem Befestigungselementestreifen angeordneten vorausgehenden Befestigungselementestreifens geeignet ist und/oder das Gegenstützelement für eine Abstützung des hintersten Aufnahmeelements an einem Stützelement eines in Transportrichtung hinter dem Befestigungselementestreifen angeordneten nachfolgenden Befestigungselementestreifens geeignet ist.

Eine vorteilhafte Ausführungsform ist dadurch gekennzeichnet, dass das Stützelement einen Vorsprung umfasst, welcher von dem vordersten Aufnahmeelement in die Transportrichtung abragt und/oder das Gegenstützelement einen Gegenstützvorsprung umfasst, welcher von dem hintersten Aufnahmeelement gegen die Transportrichtung abragt.

Eine vorteilhafte Ausführungsform ist dadurch gekennzeichnet, dass die Aufnahmeelemente jeweils eine Hülse umfassen, in welcher eines der Befestigungselemente aufgenommen ist.

Eine vorteilhafte Ausführungsform ist dadurch gekennzeichnet, dass der Befestigungselementestreifen dafür geeignet ist, in einem Transportkanal eines Magazins einer Eintreibvorrichtung in einer Transportrichtung transportiert zu werden. Die Befestigungselemente sind vorzugsweise als Nägel, Stifte, Bolzen, Schrauben, Dübel, Anker oder ähnliches ausgebildet.

Die Aufgabe ist ebenfalls gelöst bei einer Befestigungsvorrichtung mit einem Magazin, einem ersten Befestigungselementestreifen und einem zweiten Befestigungselementestreifen, wobei das Magazin einen Transportkanal für einen Transport des ersten und des zweiten Befestigungselementestreifens in einer Transportrichtung aufweist, wobei der erste und der zweite Befestigungselementestreifen nach nach einer der vorstehend beschriebenen Ausführungsformen ausgebildet sind. Bevorzugt stehen das Stützelement des in Transportrichtung nachfolgenden Befestigungselementestreifens und das Gegenstützelement des in Transportrichtung vorauslaufenden Befestigungselementestreifens miteinander in Eingriff und stützen sich gegenseitig ab.

### Ausführungsbeispiele

Nachfolgend werden Ausführungsformen einer Vorrichtung zum Eintreiben eines Befestigungselements in einen Untergrund anhand von Beispielen unter Bezugnahme auf die Zeichnungen näher erläutert. Es zeigen:
- Fig. 1: zwei Befestigungselementestreifen in einer teilweisen Seitenansicht,
- Fig. 2: einen Befestigungselementestreifen in einer teilweisen Seitenansicht und
- Fig. 3: zwei Befestigungselementestreifen in einer teilweisen Seitenansicht.

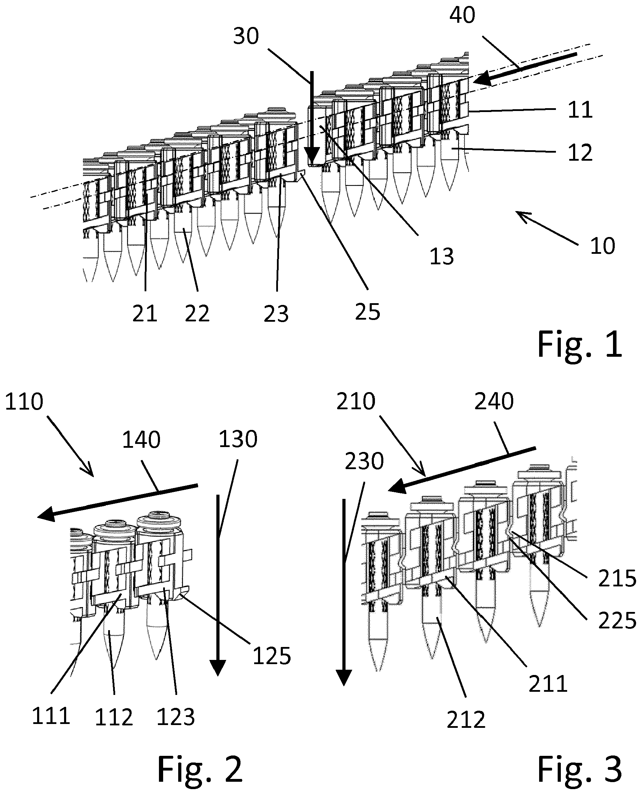

In Fig. 1 sind ein erster Befestigungselementestreifen 10 und ein zweiter Befestigungselementestreifen 20 in einer teilweisen Seitenansicht dargestellt. Der erste Befestigungselementestreifen 10 umfasst eine Vielzahl von als Hülsen ausgebildeten ersten Aufnahmeelementen 11 und in den ersten Aufnahmeelementen 11 aufgenommene erste Befestigungselemente 12, welche jeweils eine Befestigungsrichtung 30 definieren, welche für alle erste Befestigungselemente 12 gleich ist. Die ersten Aufnahmeelemente 11 sind in zwei Reihen entlang einer Transportrichtung 40 angeordnet. Der zweite Befestigungselementestreifen 20 umfasst eine Vielzahl von als Hülsen ausgebildeten zweiten Aufnahmeelementen 21 und in den zweiten Aufnahmeelementen 21 aufgenommene zweite Befestigungselemente 22, welche jeweils in der Befestigungsrichtung 30 orientiert sind. Die zweiten Aufnahmeelemente 21 sind in zwei Reihen entlang der Transportrichtung 40 angeordnet. In der Transportrichtung 40 bilden der erste Befestigungselementestreifen 10 einen nachfolgenden Befestigungselementestreifen und der zweite Befestigungselementestreifen 20 einen vorausgehenden Befestigungselementestreifen.

Die Befestigungsrichtung 30 und die Transportrichtung 40 schliessen einen Winkel von 70° miteinander ein. Ein hinterstes Aufnahmeelement 23 des zweiten Befestigungselementestreifens 20 weist ein Gegenstützelement 25 auf, welches das hinterste Aufnahmeelement 23 an einem vordersten Aufnahmeelement 13 des ersten Befestigungselementestreifens 10 in die Befestigungsrichtung 30 abstützt. Das Gegenstützelement 25 ist dazu als Gegenstützvorsprung ausgebildet, welcher von dem hintersten Aufnahmeelement 23 gegen die Transportrichtung 40 abragt und von unten an dem vordersten Aufnahmeelement 13 des ersten Befestigungselementestreifens 10 anliegt. Der erste und der zweite Befestigungselementestreifen 10, 20 greifen also in Bezug auf die Befestigungsrichtung 30 formschlüssig ineinander ein.

In Fig. 2 ist ein Befestigungselementestreifen 110 in einer teilweisen Seitenansicht dargestellt. Der Befestigungselementestreifen 110 umfasst eine Vielzahl von als Hülsen ausgebildeten Aufnahmeelementen 111 und in den Aufnahmeelementen 111 aufgenommene Befestigungselemente 112, welche jeweils eine Befestigungsrichtung 130 definieren, welche für alle Befestigungselemente 112 gleich ist. Die ersten Aufnahmeelemente 111 sind in einer Reihe entlang einer Transportrichtung 140 angeordnet.

Die Befestigungsrichtung 130 und die Transportrichtung 140 schliessen einen Winkel von 70° miteinander ein. Ein in der Transportrichtung 140 hinterstes Aufnahmeelement 123 des Befestigungselementestreifens 110 weist ein Gegenstützelement 125 auf, welches das hinterste Aufnahmeelement 123 in die Befestigungsrichtung 130 abstützt. Das Gegenstützelement 125 ist dazu als Gegenstützvorsprung ausgebildet, welcher von dem hintersten Aufnahmeelement 123 gegen die Transportrichtung 140 abragt.

In Fig. 3 ist ein Befestigungselementestreifen 210 in einer teilweisen Seitenansicht dargestellt. Der Befestigungselementestreifen 210 umfasst eine Vielzahl von als Hülsen ausgebildeten Aufnahmeelementen 211 und in den Aufnahmeelementen 211 aufgenommene Befestigungselemente 212, welche jeweils eine Befestigungsrichtung 230 definieren, welche für alle Befestigungselemente 212 gleich ist. Die ersten Aufnahmeelemente 211 sind in einer Reihe entlang einer Transportrichtung 240 angeordnet. Die Befestigungsrichtung 230 und die Transportrichtung 240 schliessen einen Winkel von 70° miteinander ein.

Für eine vereinfachte Herstellung weisen alle Aufnahmeelemente 211 die gleiche Kontur auf. Jedes Aufnahmeelement 211 des Befestigungselementestreifens 210 weist ein als Stützvorsprung ausgebildetes Stützelement 215 und ein als Gegenstützvorsprung ausgebildetes Gegenstützelement 225 auf, welche von dem jeweiligen Aufnahmeelement 211 in die Transportrichtung 240 beziehungsweise gegen die Transportrichtung 240 abragen. Das Stützelement eines nicht gezeigten vordersten Aufnahmeelements des Befestigungselementestreifens 210 stützt das vorderste Aufnahmeelement an dem Gegenstützelement eines ebenfalls nicht gezeigten hintersten Aufnahmeelements eines in Transportrichtung 240 vorauslaufenden Befestigungselementestreifens gegen die Befestigungsrichtung ab. Das Gegenstützelement eines nicht gezeigten hintersten Aufnahmeelements des Befestigungselementestreifens 210 stützt das hinterste Aufnahmeelement an dem Stützelement eines ebenfalls nicht gezeigten vordersten Aufnahmeelements eines in Transportrichtung 240 nachfolgenden Befestigungselementestreifens in die Befestigungsrichtung ab.

Die Erfindung wurde anhand einer Reihe von Ausführungsbeispielen beschrieben. Die einzelnen Merkmale der verschiedenen Ausführungsbeispiele sind einzeln oder in beliebiger Kombination miteinander anwendbar, soweit sie sich nicht widersprechen. Es wird darauf hingewiesen, dass der erfindungsgemässe Befestigungselementestreifen auch für andere Anwendungen einsetzbar ist.

## Patentansprüche

1. Befestigungselementestreifen mit Aufnahmeelementen und in den Aufnahmeelementen aufgenommenen Befestigungselementen, welche jeweils eine Befestigungsrichtung definieren, welche für alle Befestigungselemente gleich ist, wobei die Aufnahmeelemente in mindestens einer Reihe angeordnet sind, welche eine Transportrichtung, ein vorderstes Aufnahmeelement und ein hinterstes Aufnahmeelement definiert, wobei die Befestigungsrichtung und die Transportrichtung einen spitzen Winkel miteinander einschliessen, wobei der Befestigungselementestreifen ein Stützelement für eine Abstützung des vordersten Aufnahmeelements gegen die Befestigungsrichtung und/oder ein Gegenstützelement für eine Abstützung des hintersten Aufnahmeelements in die Befestigungsrichtung aufweist.

2. Befestigungselementestreifen nach Anspruch 1, wobei das vorderste Aufnahmeelement das Stützelement aufweist.

3. Befestigungselementestreifen nach einem der vorhergehenden Ansprüche, wobei das hinterste Aufnahmeelement das Gegenstützelement aufweist.

4. Befestigungselementestreifen nach einem der vorhergehenden Ansprüche, wobei das Stützelement für eine Abstützung des vordersten Aufnahmeelements an einem Gegenstützelement eines in Transportrichtung vor dem Befestigungselementestreifen angeordneten vorausgehenden Befestigungselementestreifens geeignet ist.

5. Befestigungselementestreifen nach einem der vorhergehenden Ansprüche, wobei das Gegenstützelement für eine Abstützung des hintersten Aufnahmeelements an einem Stützelement eines in Transportrichtung hinter dem Befestigungselementestreifen angeordneten nachfolgenden Befestigungselementestreifens geeignet ist.

6. Befestigungselementestreifen nach einem der vorhergehenden Ansprüche, wobei das Stützelement einen Vorsprung umfasst, welcher von dem vordersten Aufnahmeelement in die Transportrichtung abragt.

7. Befestigungselementestreifen nach einem der vorhergehenden Ansprüche, wobei das Gegenstützelement einen Gegenstützvorsprung umfasst, welcher von dem hintersten Aufnahmeelement gegen die Transportrichtung abragt.

8. Befestigungselementestreifen nach einem der vorhergehenden Ansprüche, wobei die Aufnahmeelemente jeweils eine Hülse umfassen, in welcher eines der Befestigungselemente aufgenommen ist.

9. Befestigungsvorrichtung mit einem Magazin, einem ersten Befestigungselementestreifen und einem zweiten Befestigungselementestreifen, wobei das Magazin einen Transportkanal für einen Transport des ersten und des zweiten Befestigungselementestreifens in einer Transportrichtung aufweist, wobei der erste und der zweite Befestigungselementestreifen nach einem der vorhergehenden Ansprüche ausgebildet sind.

10. Befestigungsvorrichtung nach Anspruch 9, wobei das Stützelement des in Transportrichtung nachfolgenden Befestigungselementestreifens und das Gegenstützelement des in Transportrichtung vorauslaufenden Befestigungselementestreifens miteinander in Eingriff stehen und sich gegenseitig abstützen.
